(19) Europäisches Patentamt

European Patent Office

Office européen des brevets

(11) Numéro de publication: **0 356 344 B1**

(12) **FASCICULE DE BREVET EUROPEEN**

(45) Date de publication de fascicule du brevet: **15.09.93** (51) Int. Cl.⁵: **H02H 3/347**

(21) Numéro de dépôt: **89420265.4**

(22) Date de dépôt: **21.07.89**

(54) **Dispositif de protection différentielle.**

(30) Priorité: **05.08.88 FR 8810717**

(43) Date de publication de la demande:
**28.02.90 Bulletin 90/09**

(45) Mention de la délivrance du brevet:
**15.09.93 Bulletin 93/37**

(84) Etats contractants désignés:
**BE DE ES GB IT**

(56) Documents cités:
**DE-A- 2 512 811**
**FR-A- 1 365 154**
**US-A- 4 276 510**

(73) Titulaire: **MERLIN GERIN**
**2, chemin des Sources**
**F-38240 Meylan(FR)**

(72) Inventeur: **Paupert, Marc**
**MERLIN GERIN Sce. Brevets**
**F-38050 Grenoble Cédex(FR)**
Inventeur: **Bonniau, Michel**
**MERLIN GERIN Sce. Brevets**
**F-38050 Grenoble Cédex(FR)**
Inventeur: **Leroy, Jean**
**MERLIN GERIN Sce. Brevets**
**F-38050 Grenoble Cédex(FR)**

(74) Mandataire: **Ritzenthaler, Jacques et al**
**Merlin Gerin Sce. Propriété Industrielle**
**F-38050 Grenoble Cédex 9 (FR)**

## Description

L'invention est relative à un dispositif de protection differentielle sensible à un courant de défaut différentiel alternatif, continu ou périodique comprenant un transformateur-sommateur à circuit magnétique torique, traversé par les conducteurs actifs, qui constituent les enroulements primaires du transformateur et à deux enroulements secondaires identiques enroulés en opposition de flux sur le tore et appartenant à un circuit oscillateur, d'excitation alternative desdits enroulements secondaires, dont la fréquence de polarisation du circuit magnétique torique est notablement supérieure à celle du courant parcourant les conducteurs actifs (US-A- 4 276510).

La polarisation du circuit magnétique par un courant de fréquence relativement élevée permet une mesure des courants de défaut différentiels continus ou variant très lentement et la réalisation d'appareils de la classe B sensibles aux différents types de défaut.

Les dispositifs connus du genre mentionné sont compliqués et n'assurent pas des mesures précises et fiables, indépendantes des variations de températures ou des dérives des composants.

L'invention a pour but la réalisation d'un dispositif simple et fiable réagissant aux défauts alternatifs, périodiques ou variant très lentement.

Le dispositif selon l'invention est caractérisé en ce qu'il comporte un dispositif de détection de la variation en fonction du temps du courant, parcourant lesdits enroulements secondaires, pour désexciter l'enroulement secondaire correspondant, lorsque la variation de courant dépasse une valeur de seuil prédéterminée et déclencher l'excitation de l'autre enroulement secondaire et un dispositif de mesure du rapport du temps d'excitation desdits enroulements secondaires pour engendrer un signal de défaut lorsque ledit rapport dépasse un seuil prédéterminé.

L'emploi selon l'invention de deux enroulements secondaires identiques pouvant être enroulés simultanément, excités alternativement simplifie notablement le circuit d'excitation à oscillateur, notamment le nombre de transistors assurant la commutation , laquelle est pilotée par la saturation du tore, détectée par une variation brusque du courant dans les enroulements secondaires. La détection de la variation brusque du courant, en l'occurrence de la dérivée de ce courant par rapport au temps est facile à réaliser et la mesure est précise et fiable. La mesure du courant ou de sa variation dans l'un ou l'autre des enroulements est toujours faite avec le même circuit, notamment la même résistance, ce qui conduit à une symétrie parfaite du seuil assurant les commutations. Les signaux de courant sont toujours de même signe et le seuil d'un seul composant détermine la commutation. Une dérive de ce seuil affecte les deux alternances sans fausser la mesure. La sensibilité aux variations de température, due en particulier aux variations des caractéristiques magnétiques du tore avec la température, est notablement réduite ou compensée par la mesure du rapport des temps d'excitation des enroulements secondaires.

Selon un développement de l'invention, l'excitation de l'enroulement secondaire est légèrement temporisée pour engendrer une période de repos entre les excitations successives des enroulements secondaires, permettant au matériau du tore de venir au point de repos sur le cycle d'hystérésis correspondant à un champ nul. Une éventuelle dissymétrie entre les temps d'excitation apparait ainsi plus clairement. Un maximum de précision sur l'instant de saturation du matériau magnétique peut être obtenu en utilisant un matériau ayant un coude de saturation bien marqué.

Il est important de réduire au maximum le courant d'excitation des enroulements secondaires pour limiter la consommation du courant et l'échauffement correspondant et le dispositif selon l'invention répond à ce besoin, tout en assurant une fiabilité de signalisation d'un défaut ou de déclenchement d'un appareil de protection différentielle avec des marges de sécurité très réduites. La stabilisation du tore en température n'est pas indispensable.

D'autres avantages et caractéristiques ressortiront plus clairement de la description qui va suivre d'un mode de mise en oeuvre de l'invention donné à titre d'exemple non limitatif et représenté aux dessins annexés dans lesquels:

- la figure 1 est le schéma synoptique du dispositif de protection selon l'invention;
- La figure 2 représente la courbe d'hystérésis simplifiée du matériau magnétique constituant le tore selon la figure 1;
- la figure 3 montre les variations du courant d'excitation des enroulements secondaires lors du franchissement du seuil de saturation du tore;
- les figures 4 à 8 représentent les signaux aux différents emplacements repérés sur le schéma de la figure 1.

Sur les figures un transformateur-sommateur 10 d'un dispositif de protection différentielle, notamment d'un interrupteur ou disjoncteur différentiel, comporte un tore 12 traversé par les deux conducteurs P,N du réseau alimentant un circuit et une charge protégée par le dispositif de protection différentielle. Le nombre de conducteurs P,N traversant le tore 12 et constituant les enroulements primaires à un seul passage du transformateur-sommateur 10, est bien entendu plus élevé dans le cas d'un réseau polyphasé. Sur le tore 12 sont enroulés deux enroulements secondaires 14,16 en opposition et avec un point commun 18 relié à la masse par l'intermédiaire d'une résistance de mesure 20. Les extrémités opposées des enroulements secondaires 14,16 sont reliées à une source de courant 22 respectivement par l'intermédiaire de transistors 24,26, de manière à exciter l'enroulement 14 lors de la conduction du transistor 24, et inversement à exciter l'enroulement 16 en inversant le flux magnétique dans le tore 12 lors de la conduction du transistor 26. Chaque enroulement secondaire 14,16 est alternativement excité par un créneau de tension, alors que l'autre est placé en haute impédance avec retour au repos pendant une durée prédéterminée. Cette excitation est pilotée par une bascule 28 connectée en flip-flop et émettant sur ses sorties $Q,\overline{Q}$ des signaux de conduction respectivement destinés aux transistors 24 et 26. La mesure du courant circulant dans l'un ou l'autre des enroulements secondaires 14,16 est faite par la résistance 20 qui engendre un signal de courant appliqué à un circuit 30 de détection de dérivée de tension par rapport au temps. Ce circuit détecteur de dérivée de tension 30 comporte un transistor 32 dont la base est reliée par l'intermédiaire d'un condensateur 34 à la résistance de mesure 20, avec une résistance 36 de shuntage du transistor 32. La sortie du circuit détecteur 30 est reliée par l'intermédiaire d'un inverseur 38, qui inverse le sens du front de commutation, à la borne de commande 40, de la bascule 28.

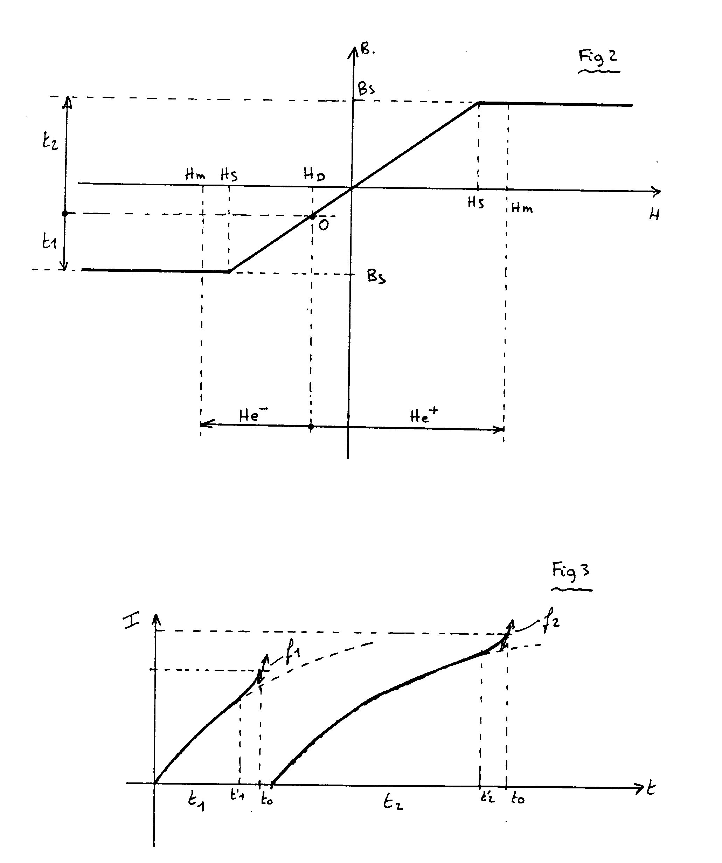

La source de courant 22 est suffisante pour saturer le matériau magnétique du tore 12, dont le cycle d'hystérésis est schématiquement représenté sur la figure 2 par une droite inclinée se prolongeant de part et d'autre du point de saturation Bs par des droites horizontales. A un instant donné de conduction du transistor 24, le courant fournit par la source 22 excite le bobinage secondaire 14 en déplaçant le point de magnétisation du tore 12 du point 0 vers le point de saturation Bs. Le courant parcourant l'enroulement secondaire 14 est mesuré par la résistance 20 et la tension aux bornes de cette résistance est directement proportionnelle à ce courant. Lorsque le courant atteint une valeur correspondant au point ou au coude de saturation Bs du tore 12, ce courant augmente brusquement, et cette variation brusque est détectée par le circuit détecteur de dérivée du courant 30 qui émet un signal d'horloge provoquant le basculement de la bascule 28. L'inverseur 38 sert à inverser le sens du front d'horloge. Ce basculement provoque le blocage du transistor 24 en arrêtant l'alimentation de l'enroulement secondaire 14, et après une faible temporisation provoque la conduction du transistor 26 pour alimenter l'enroulement secondaire 16 par la source de courant 22. La faible temporisation permet au matériau magnétique de revenir en position de repos correspondant à un champ nul. Le passage du courant dans l'enroulement secondaire 16 engendre un flux magnétique opposé qui polarise le tore 12 en direction opposée jusqu'au point de saturation inverse Bs suivi d'une augmentation brusque du courant, détectée par le même circuit de mesure 20 et de détection de dérivée 30 qui engendre un nouveau signal de basculement de la bascule flip-flop 28. L'ensemble constitue un oscillateur de polarisation du tore 12, dont la fréquence d'oscillation est déterminée par la fréquence des signaux de basculement de la bascule 28. Cette fréquence dépend directement du temps de montée en courant pour atteindre la saturation du matériau magnétique du tore 12 dans un sens et dans l'autre. Lorsque le courant circulant dans les enroulements primaires P,N s'équilibre, en l'occurrence en l'absence d'un défaut différentiel, les temps de montée en courant sont bien entendus identiques et les deux alternances d'excitation des enroulements secondaires 14,16 ont une même durée. L'ensemble est agencé pour obtenir une fréquence d'oscillation élevée notablement supérieure à la fréquence du réseau.

Lors de l'apparition d'un défaut différentiel se traduisant par exemple sur la figure 2 par un champ HD déplaçant le point de repos vers la gauche, il est facile de voir que l'augmentation du champ, et de ce fait du courant de polarisation pour atteindre la saturation, sera différente selon la polarité du courant et que le temps t2 de montée du courant pour atteindre la saturation opposée au champ continu de défaut HD, sera plus grande que le temps t1 pour atteindre la saturation de polarité opposée. La figure 3 illustre les variations du courant parcourant les enroulements secondaires 14,16 en fonction du temps. Pendant la durée t1, l'un des enroulements, par exemple l'enroulement secondaire 14 est parcouru par un courant déplaçant le point de magnétisation du tore 12 vers le point de saturation HS disposé du même côté que le champ continu HD. Dès la saturation du tore 12 au point t'1, le courant augmente brusquement et la commutation est provoquée par le circuit détecteur 30, lorsque la dérivée du courant , c'est à dire lorsque la pente de la courbe dépasse une valeur prédéterminée indiquée par la flèche f1 sur la courbe. Dès le franchissement de ce seuil, l'excitation du courant dans l'enroulement secondaire 14 est interrompue par blocage du transistor 24 et mise en haute impédance pour un retour au repos pendant une durée t0. Après cette durée de repos et venu du matériau magnétique au point HD, le transistor 26 est piloté par la bascule 28 pour alimenter l'enroulement secondaire 16. La montée en courant représentée par la courbe t2 est notablement plus longue pour atteindre le point de saturation t'2 du tore 12. Dès le franchissement de ce point de saturation, le courant augmente brusquement et la pente de la courbe dépasse le seuil de détection du circuit détecteur 30 représenté par la flèche f2 parallèle à la flèche f1. Ce franchissement du seuil correspond à un signal d'horloge faisant basculer la bascule 28 pour piloter le transistor 26 au blocage. Après une nouvelle période de temporisation correspondant à un retour à 0, le cycle recommence par une excitation de l'enroulement 14 de la manière décrite ci-dessus. La différence des temps t1,t2 de polarisation du tore 12 en cas de présence d'un défaut HD ressort clairement de la figure 3.

Il est clair que cette différence de temps est fonction de la valeur du défaut, et de ce fait du champ continu HD de magnétisation du tore 12. La dérivée du courant fournit une indication précise du franchissement du seuil de saturation du tore 12, et le courant d'excitation peut être interrompu dès le franchissement de ce seuil de saturation, ce qui limite les pertes de consommation de courant, et l'échauffement du transformateur différentiel. Le point de commutation du transistor 24,26 est extrèmement proche des points de saturation du tore 12. Il est clair que le courant de défaut engendrant un champ de défaut HD peut être un courant continu ou un courant alternatif qui par rapport à la fréquence d'excitation du tore 12, se traduit par un courant continu. Tout autre type de défaut est d'ailleurs détecté de la même manière, le changement de la polarité du défaut se traduisant simplement par une inversion des temps d'excitation des enroulements secondaires 14,16.

En l'absence de défaut différentiel, les temps t1 et t2 sont bien entendu identiques et la période d'oscillation est égale à t1 + t0 + t2 + t0.

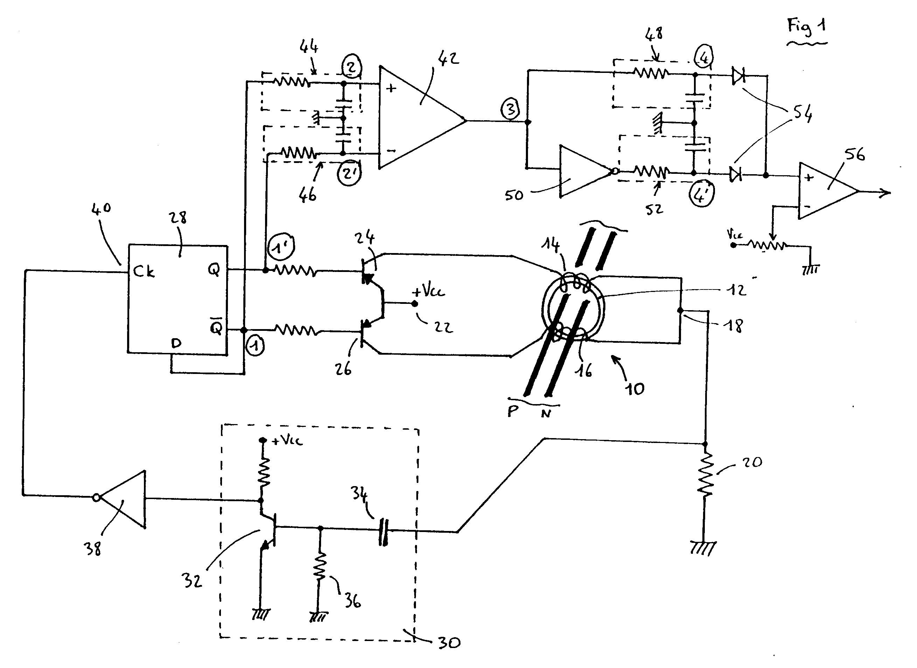

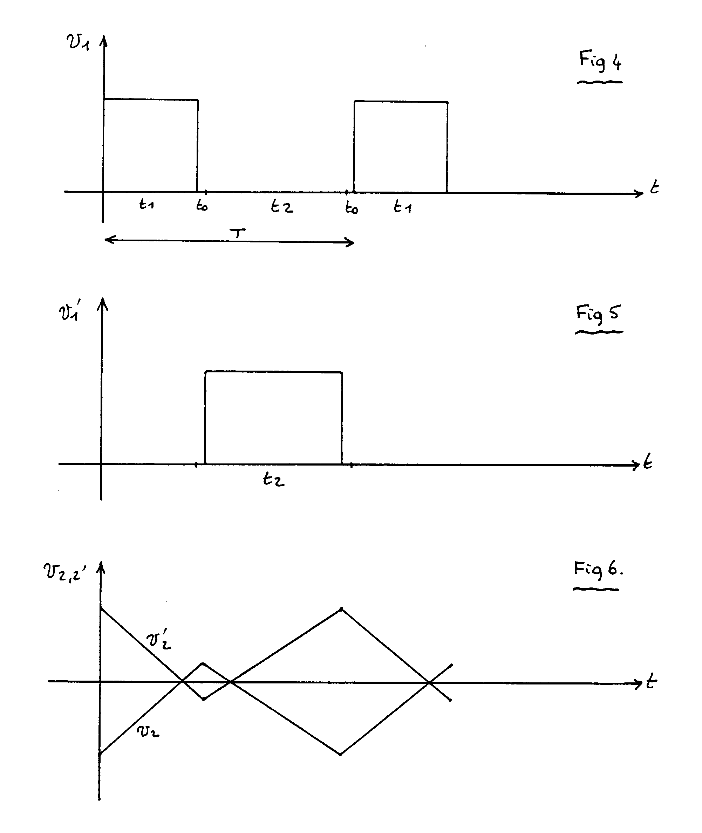

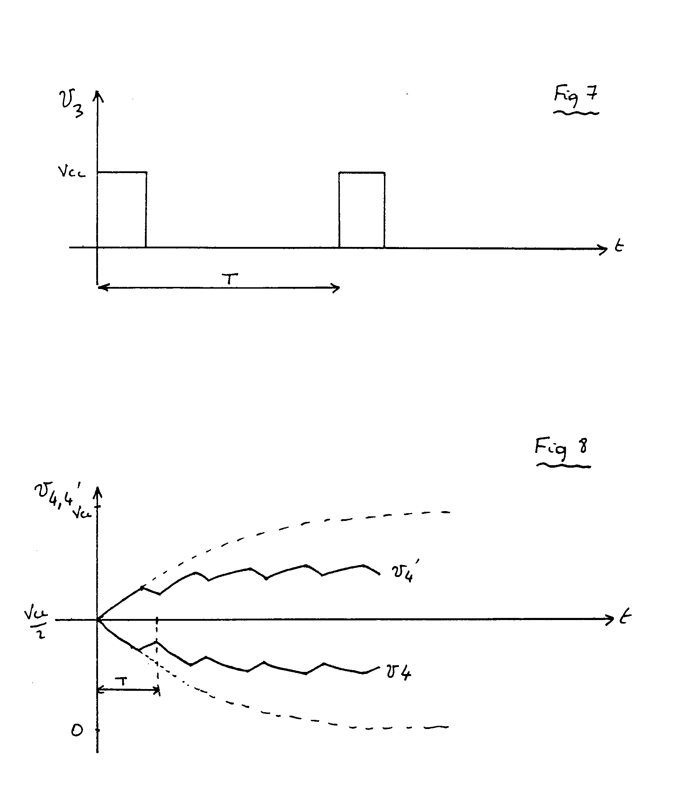

La mesure des temps d'excitation des enroulements 14,16 peut être faite de différentes manières, par exemple par des compteurs numériques ou par tout autre système à horloge bien connus des spécialistes. La figure 1 représente un dispositif de mesure analogique engendrant directement un signal de sortie proportionnel au courant différentiel de défaut. Les temps t1 et t2 d'excitation des enroulements secondaires 14,16 correspondent bien entendu aux temps de conduction des transistors 24,26 et de ce fait, à la présence des signaux de commande aux sorties Q,$\overline{Q}$ de la bascule 28. Les sorties Q,$\overline{Q}$ sont reliées respectivement aux entrées d'un amplificateur 42 par l'intermédiaire de deux circuits intégrateurs 44,46 constitués chacun par une résistance et un condensateur. Les signaux présents aux points 1,1' de la figure 1, correspondant aux sorties Q,$\overline{Q}$ de la bascule 28, sont des signaux rectangulaires représentés aux figures 4 et 5. A la sortie des circuits intégrateurs 44,46, aux points 2,2' de la figure 1 apparaissent les signaux de tension V2,V2' représentés sur la figure 6 qui sont appliqués aux entrées de l'amplificateur comparateur 42. L'ensemble circuit-intégrateur 44,46, comparateur 42 constitue un amplificateur de rapport cyclique dont la sortie au point 3 fournit un signal rectangulaire selon la figure 7 proportionnel au courant de défaut différentiel. Ce signal de rapport cyclique est appliqué d'une part directement à un circuit intégrateur 48 à résistance et à condensateur et d'autre part, par l'intermédiaire d'un inverseur 50 à un circuit intégrateur 52. Les sorties des circuits intégrateurs 48,52 sont après redressement par des diodes 54 appliquées à l'entrée d'un comparateur de franchissement de seuil 56. Les signaux de tension aux points 4,4' de sortie des circuits intégrateurs 48,52 sont représentés à la figure 8 et le franchissement d'un seuil prédéterminé provoque la signalisation du défaut différentiel ou le déclenchement d'un appareil de protection correspondant. Les circuits de traitement font apparaître un rapport des temps permettant d'éliminer ou de réduire les erreurs dues à des variations de température. Il est clair que le circuit de traitement peut être réalisé de toute autre manière, l'exemple représenté à la figure 1 n'ayant été donné qu'à titre d'illustration.

La compensation en température du principe de traitement permet l'utilisation d'un tore non compensé, et le choix d'une fréquence élevée de l'oscillateur, par exemple de quelques KHz permet une mesure d'un courant de défaut différentiel d'un type quelconque, notamment continu, alternatif ou périodique. Les appareils équipés d'un tel dispositif différentiel sont de la classe B .

## Revendications

1. Dispositif de protection différentielle sensible à un courant de défaut différentiel alternatif, continu ou périodique comprenant un transformateur-sommateur (10) à circuit magnétique torique (12), traversé par les conducteurs actifs (P,N), qui constituent les enroulements primaires du transformateur et à deux enroulements (14,16) secondaires identiques enroulés en opposition de flux sur le tore (12) et appartenant à un circuit oscillateur d'excitation alternative desdits enroulements secondaires dont la fréquence de polarisation du circuit magnétique torique est notablement supérieure à celle du courant parcourant les conducteurs actifs, caractérisé en ce qu'il comporte un dispositif de détection (20-40) de la variation en fonction du temps du courant parcourant lesdits enroulements secondaires (14,16) pour désexciter l'enroulement secondaire correspondant, lorsque la variation de courant dépasse une valeur de seuil prédéterminée et déclencher l'excitation de l'autre enroulement secondaire et un dispositif de mesure (42-56) du rapport du temps d'excitation desdits enroulements secondaires pour engendrer un signal de défaut lorsque ledit rapport dépasse un seuil prédéterminé.

2. Dispositif de protection différentielle selon la revendication 1, caractérisé en ce qu'il comporte un temporisateur pour introduire un intervalle de temps de repos entre la désexcitation de l'un desdits enroulements secondaires (14,16) et l'excitation successive de l'autre desdits enroulements secondaires, ledit intervalle de temps étant d'une durée suffisante pour permettre le retour de la polarisation magnétique du tore (12) au point de repos correspondant à l'absence d'un courant d'excitation.

3. Dispositif de protection différentielle selon la revendication 1 ou 2, caractérisé en ce que lesdits deux enroulements secondaires (14,16) en opposition ont un point commun relié à une résistance (20) de mesure du courant parcourant lesdits enroulements secondaires, laquelle résistance engendre un signal de courant appliqué à un circuit de détection (30) de la dérivée dudit signal par rapport au temps, et de franchissement d'un seuil par ladite dérivée.

4. Dispositif de protection différentielle selon la revendication 3, caractérisé en ce que ledit circuit oscillateur comporte une bascule (28) connectée en flip-flop, dont le signal d'horloge est fourni par ledit circuit de détection (30) et de franchissement d'un seuil par ladite dérivée.

5. Dispositif de protection différentielle selon la revendication 1,2 ou 3 caractérisé en ce que ledit dispositif de mesure du rapport du temps d'excitation comprend un premier étage amplificateur (42-46) de rapport cyclique d'excitation desdits enroulements secondaires (14,16) et un deuxième étage (48-56) convertisseur du rapport cyclique en un signal de tension représentatif dudit courant de défaut.

6. Dispositif de protection différentielle selon l'une quelconque des revendications précédentes, caractérisé en ce que le cycle d'hystérésis dudit circuit magnétique torique (12) présente un coude de saturation bien marqué.

## Claims

1. A differential protective device sensitive to an A.C., D.C. or periodic differential fault current, comprising a summing transformer (10) with a toroidal magnetic circuit (12), through which the active conductors (P, N) forming the transformer primary windings pass, and with two identical secondary windings (14,16) wound in opposed flux on the toroid (12) and belonging to an oscillator circuit for alternate excitation of said secondary windings, the polarization frequency of the toroidal magnetic circuit of which is notably greater than that of the current flowing in the active conductors, characterized in that it comprises a detection device (20-40) of the variation with respect to time of the current flowing in said secondary windings (14,16), to de-energize the corresponding secondary winding when the current variation exceeds a preset threshold value and trigger excitation of the other secondary winding, and a measuring device (42-56) of the ratio of the excitation times of said secondary windings to generate a fault signal when said ratio exceeds a preset threshold.

2. The differential protective device according to claim 1, characterized in that it comprises a time delay device to introduce a rest time interval (to) between de-energization of one of said secondary windings (14, 16) and successive excitation of the other of said secondary windings, said time interval being of sufficient duration to enable the magnetic polarization of the toroid (12) to return to the rest point corresponding to the absence of an excitation current.

3. The differential protective device according to claim 1 or 2, characterized in that said two secondary windings (14, 16) in opposition have a common point connected to a resistor (20) measuring the current flowing in said secondary windings, which resistor generates a current signal applied to a detection circuit (30) of the derivative of said signal with respect to time, and of overshooting of a threshold by said derivative.

4. The differential protective device according to claim 3, characterized in that said oscillator circuit comprises a flip-flop (28), whose clock signal is supplied by said detection circuit (30) of overshooting of a threshold by said derivative.

5. The differential protective device according to claim 1, 2 or 3, characterized in that said excitation time ratio measuring device comprises a first stage (42-46) amplifying the cyclic excitation ratio of said secondary windings (14, 16) and a second stage (48-56) converting the cyclic ratio into a voltage signal representative of said fault current.

6. The differential protective device according to any one of the above claims, characterized in the hysteresis cycle of said toroidal magnetic circuit (12) presents a well-marked saturation bend.

**Patentansprüche**

1. Differenzstrom-Schutzeinrichtung, die auf einen als Wechsel-, Gleich- oder periodischer Strom auftretenden Differenz-Fehlerstrom anspricht und einen Summenstromwandler (10) mit magnetischem Ringkreis (12) umfaßt, der Von den die Primärwicklung des Stromwandlers bildenden aktiven Leitern (P, N) durchquert wird, zwei identische, in entgegengesetzter Flußrichtung um den Ringkern (12) gewickelte Sekundärwicklungen (14, 16) aufweist und Bestandteil eines Schwingkreises ist, der die genannten Sekundärwicklungen abwechselnd erregt und dessen Frequenz zur Polarisierung des magnetischen Ringkreises wesentlich höher ist als die Frequenz des die aktiven Leiter durchfließenden Stroms, dadurch gekennzeichnet, daß sie eine Schaltungsanordnung (20-40), die die zeitabhängige Änderung des die genannten Sekundärwicklungen (14, 16) durchfließenden Stroms zur Entregung der entsprechenden Sekundärwicklung bei Überschreiten eines festgelegten Schwellwerts durch die Stromänderung und zur Erregung der anderen Sekundärwicklung erfaßt sowie eine Meßanordnung (42-56) aufweist, die das Verhältnis der Erregungszeiten der genannten Sekundärwicklungen mißt, um ein Fehlersignal zu erzeugen, wenn dieses Verhältnis einen festgelegten Schwellwert überschreitet.

2. Differenzstrom-Schutzeinrichtung nach Anspruch 1 dadurch gekennzeichnet, daß sie ein Zeitglied zur Einfügung einer Pausenzeit ($t_0$) zwischen der Entregung einer der genannten Sekundärwicklungen (14, 16) und der darauf folgenden Erregung der anderen der genannten Sekundärwicklungen aufweist, wobei die genannte Pausenzeit ausreichend lang ist, um die Rückkehr der magnetischen Polarisierung des Ringkerns (12) in den Ruhezustand entsprechend einem Zustand ohne Erregerstrom zu ermöglichen.

3. Differenzstrom-Schutzeinrichtung nach Anspruch 1 oder 2, dadurch gekennzeichnet, daß die beiden im Gegensinn aufgebrachten genannten Sekundärwicklungen (14, 16) einen gemeinsamen Punkt aufweisen, der mit einem Widerstand (20) zur Messung des die genannten Sekundärwicklungen durchfließenden Stroms verbunden ist, wobei dieser Widerstand ein Stromsignal erzeugt, mit dem eine Erfassungsschaltung (30) zur Erfassung des Ableitungswertes dieses Signals nach der Zeit und der Überschreitung eines Schwellwerts durch den genannten Ableitungswert beaufschlagt wird.

4. Differenzstrom-Schutzeinrichtung nach Anspruch 3, dadurch gekennzeichnet, daß der genannte Schwingkreis eine als Flipflop geschaltete Kippstufe (28) umfaßt, deren Taktsignal von der genannten Schaltung (30) zur Erfassung des genannten Ableitungswerts und seiner Schwellwert-Überschreitung geliefert wird.

5. Differenzstrom-Schutzeinrichtung nach Anspruch 1, 2 oder 3 dadurch gekennzeichnet, daß die genannte Anordnung zur Messung des Verhältnisses der Erregungszeiten eine erste Verstärkerstufe (42-46) mit zyklischem Verstärkungsfaktor zur Erregung der genannten Sekundärwicklungen (14, 16) sowie eine zweite Stufe (48-56) zur Umwandlung des zyklischen Verstärkungssignals in ein den genannten Fehlerstrom abbildendes Spannungssignal.

6. Differenzstrom-Schutzeinrichtung nach irgendeinem der vorhergehenden Ansprüche, dadurch gekennzeichnet, daß die Ummagnetisierungskennlinie des genannten Ringern-Magnetkreises (12) einen deutlich ausgeprägten Sättigungsknick aufweist.

Fig 1

EP 0 356 344 B1

Fig 2

Fig 3

Fig 4

Fig 5

Fig 6.

Fig 7

Fig 8